Europäisches Patentamt

European Patent Office

Office européen des brevets

(19)

(11) Publication number: **0 085 467**

**A1**

(12) **EUROPEAN PATENT APPLICATION**

(21) Application number: **83200168.9**

(22) Date of filing: **28.01.83**

(51) Int. Cl.³: **F 16 K 31/143**
**F 16 T 1/12**

(30) Priority: **29.01.82 NL 8200348**

(43) Date of publication of application:
**10.08.83 Bulletin 83/32**

(84) Designated Contracting States:
**AT BE CH DE FR GB IT LI LU NL SE**

(71) Applicant: **GOUDSCHE MACHINEFABRIEK B.V.**
**Kattensingel 21,**
**NL-2801 CA Gouda(NL)**

(72) Inventor: **Van der Schoot, Peter Willem Carolus**
**Ijsseldijk Noord 207**
**NL-2935 BN Ouderkerk a/d Ijssel(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **A device for discharging dirty liquid from a pressurized vessel.**

(57) A needle valve (2) or other pointed valve is arranged in a valve casing (1), said valve being movable in the fluid inflow direction and perpendicular to the associated seat (18), and the portion of which extending out of the casing is axially displaceable on the one hand by adjusting means (15) and on the other hand, independently thereof, by a piston-and-cylinder (9) assembly.

EP 0 085 467 A1

./...

Croydon Printing Company Ltd.

Title: A device for discharging dirty liquid from a
        pressurized vessel

The invention relates to a device for discharging dirty
liquid from a pressurized vessel.

It is known to use a steam trap for the discharge of
liquid, in casu condensate, from a pressurized vessel.
However, such a steam trap has been found to function properly
only when it has to process exclusively clean fluid.

The invention relates more in particular to a device
for discharging fluid from a pressurized vessel, comprising
a valve casing having a supply and discharge opening, a valve
mounted in said valve casing, said valve being fitted with
a stem extending out of said valve casing and adapted to
coact with a seat disposed around the supply opening, said
stem being further connected to the piston rod of a piston-
and-cylinder assembly, and means being provided for axially
and adjustably displacing the piston rod relative to the
cylinder.

In such a similar device disclosed in British patent
1,177,602, use is made of a slide valve, which is entirely
unsuitable for the discharge of dirty water, i.e. carrying
both abrasive components, such as sand and larger solid
components.

It is the object of the invention to provide a device with
which also dirty fluid can be removed from a pressurized
vessel. The invention is in particular destined for discharging dirty condensate from e.g. a peeling vessel.

To this effect, the device according to the invention is characterized in that for the purpose of discharging dirty fluid, use is made of a valve movable in the fluid in flow direction and perpendicular to the associated seat, the cylinder being fitted with a fixed stop for adjusting a gap width between the valve and the seat.

In a further embodiment of the invention, the valve member may have a pointed shape and be arranged centrically relative to the opening in the valve seat, thus easily breaking any inflowing coarse dirt.

Furthermore, the valve seat may form part of a sleeve disposed in the supply opening and fitted with a collar, the sleeve-averted end of which is conical. This latter makes for as laminar an inflow of dirty water as possible.

The piston-and-cylinder assembly is commonly connected via a closable line to the steam supply line or a conduit for compressed air or the like. As a result, the device is highly suitable for processing condensate originating from a peeling vessel, which condensate is usually contaminated with peels, sand and small pieces of fibrous matter; for due to the constantly present gap, it is possible to continuously discharge condensate with small dirt, while as a result of the periodic operation of the piston-and-cylinder assembly, also coarser dirt can be removed.

From a constructive viewpoint, the valve casing and the cylinder assembly in the device according to the invention can be fixedly interconnected with interposition of an assembly yoke, the valve, during normal operation, can be urged towards the seat by means of a fluid supplied to the piston-and-cylinder assembly (e.g. compressed air), and the means for axially displacing the piston rod can be formed by an internally threaded end of the piston rod, while the sleeve abuts against the said stop. As a result, the whole consists substantially of commercially available, inexpensive mass articles.

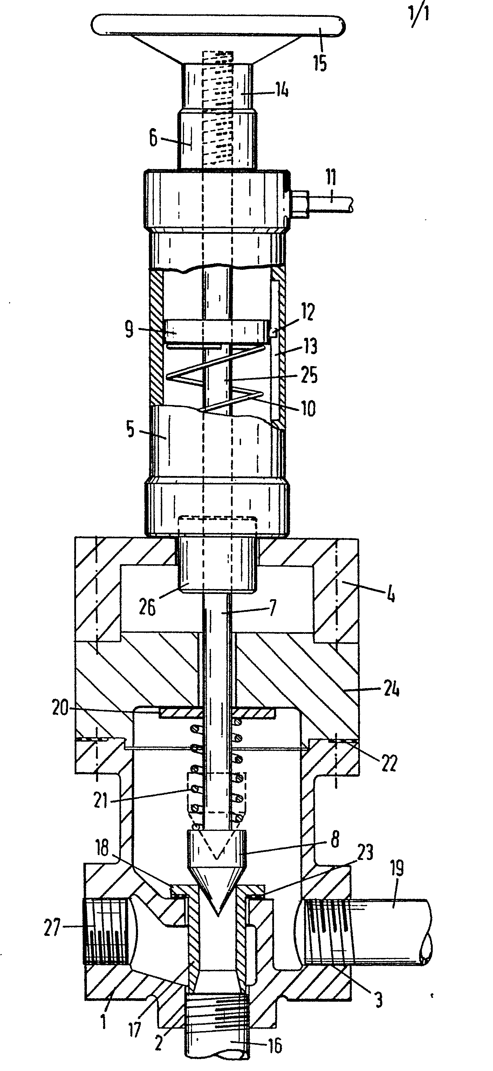

One embodiment of a device according to the invention for discharging dirty water from a pressurized vessel will now be described, by way of example, with reference to the accompanying drawing, showing a partly elevational view of a longitudinal section thereof.

According to the drawing, the device comprises a casing 1 with a supply opening 2 and a discharge opening 3. Affixed to the cover 24 of the casing 1 is an assembly yoke 4 by means of screws not further indicated. To the assembly yoke there is in turn attached a cylinder 5 fitted with a fixed stop 6. Through the cylinder there extends a rod 25 with a piston 9 secured thereto.

Through the cover 24 there extends a valve stem 7 at the bottom end of which there is disposed a valve 8. Adjacent the yoke 4, the piston rod 25 and the valve stem 7 are interconnected through a coupling sleeve 26 threaded partly left-hand and partly right-hand.

On one side piston 9 is under the influence of a spring 10 and on the other side under the influence of compressed air supplied via a line 11. As shown in the drawing, the piston 9 comprises a projection 12 which upon movement of the piston is adapted to slide through the groove 13 in the cylinder wall, so that the rod 25 is secured against rotation.

At the top end, the rod 25 is threaded, allowing coaction with the internal thread of a sleeve or stop element 14 affixed to a hand wheel 15.

A discharge pipe 19 is provided in the discharge opening 3, while a sleeve 17 having a collar 18 is disposed beside a supply pipe 16 in the supply opening 2. The lower end of the sleeve is conical so as to ensure that the dirty water supplied via the pipe 16 causes no or little turbulence, so that this can easily pass the opening between the pointed valve 8 and the collar 18 constituting the valve seat.

To ensure that no dirty water leaks or flows along the valve stem 7 from the casing 1, there is provided on the rod a sealing ring 20 which is kept in place by a spring 21.

Furthermore, packings are provided between coacting faces: the drawing shows only two, i.e. 22 and 23.

It is observed that this publication refers to a valve stem and a piston rod, which parts are connected by a coupling sleeve, thereby being integral. This is due to the fact that during the manufacture of the experimental model, the starting point was to use normally commercially available elements (the casing consisted e.g. of a steam trap, parts of which had been removed, on the one hand, while on the other hand an unnecessary opening had been sealed with a plug 27), which can be interconnected in a simple manner. Probably, mass products will also be used in the future implementation of the invention, so that the device can be kept inexpensive: naturally, it is also possible to manufacture the device as a totally new product.

The operation of the above described device is as follows: by rotation of the hand wheel 15, the valve 8 is moved a small distance upwards away from the seat, so that the inflowing dirty water or dirty condensate can be discharged continuously. However, when at a given moment, a substantial quantity of condensate has to be discharged, or in case of imminent clogging of the annular gap between the collar 18 and the valve 8, the rod 25,7 is pulled upwards by means of the spring 10 by removal of the compressed air from the line 11 or the cylinder 5, thus completely opening the supply opening, so that the clogging will be easily eliminated.

It is observed that due to the pointed shape of the valve, any inflowing coarse dirt will be easily broken. On the other hand, the device is designed in such a way that it is self-cleaning.

The device according to the invention is highly suitable for discharging the   starch-containing condensate from the peeling vessel of a steam peeling device. For the device according to the invention makes it possible to discharge condensate during operation, in contrast to the known steam peeling devices, wherein the condensate is not to be discharged until after letting off steam, i.e. during the pressureless period. Since this discharge takes approx. 7 seconds, while the entire cycle time is approx. 60 sec., the application of the device according to the invention means a time-saving of approx. 10%.

Moreover, the device according to the invention has the advantage that due to the continuous discharge of condensate, the condensate chamber kan be kept smaller, so that space is gained in the peeling vessel.

Since the quantity of condensate continuously discharged can be adjusted, it can be ensured that always a small quantity of condensate is present in the peeling vessel, so that the product to be peeled does not become too dry and hence can be processed or peeled further with facility. By virtue of the shape of the valve and the valve casing, the unavoidable starch present in the condensate will not be easily deposited therein.

It will be clear that a great many possibilities exist within the scope of the invention: for instance, use is made in the device represented of a single-acting, spring-fitted, pneumatic piston-and-cylinder assembly, but naturally, an entirely different piston-and-cylinder assembly could be used here. Also the hand wheel and the stop may be designed and arranged in the device quite differently. Moreover, the hand wheel may be designed in such a way that the position thereof is indicative of the size of the gap adjusted between the valve and the seat. The pertinent gap width, however, could also be made adjustable by making the sleeve 17 adjustable.

## CLAIMS

1.     A device for discharging liquid from a pressurized vessel, comprising a valve casing having a supply and discharge opening, a valve mounted in said valve casing, said valve being fitted with a stem extending out of the valve casing and adapted to coact with a seat disposed around the supply opening, said stem being further connected to the piston rod of a piston-and-cylinder assembly, and means being provided for axially and adjustably displacing the piston rod relative to the cylinder, characterized in that for discharging dirty fluid, use is made of a valve movable in the fluid inflow direction and perpendicular to the associated seat, the cylinder being fitted with a fixed stop for adjusting a gap width between the valve and the seat.

2.     A device according to claim 1, characterized in that the valve member has a pointed shape and is arranged centrically relative to the opening in the valve seat.

3.     A device according to claim 1 or 2, characterized in that the valve seat forms part of a sleeve having a collar and disposed in the supply opening, the collar-averted end of which is conical.

4.     A device according to claim 3, characterized in that the supply opening terminates centrally in the valve casing.

5.     A device according to one or more of the preceding claims,

characterized in that the valve casing and the cylinder-and-piston assembly are fixedly interconnected with interposition of an assembly yoke, the valve, during normal operation, is urged towards the seat and the means for the axial displacement of the piston rod are formed by an internally threaded, rotatable sleeve adapted to coact with the externally threaded end of the piston rod, the sleeve abutting against the said stop.

0085467

Application number

EP 83 20 0168

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-2 908 477 (BURI)<br>* Column 2, line 17 - column 3, line 12 * | 1,2,5 | F 16 K 31/143<br>F 16 T 1/12 |
| A | GB-A- 999 824 (STAMICARBON)<br>* Page 2, line 69 - page 3, line 61 * | 1,2,4 | |
| D,A | GB-A-1 177 602 (CAMCO)<br>* Page 1, line 73 - page 2, line 106 * | 1,5 | |

TECHNICAL FIELDS
SEARCHED (Int. Cl. ³)

F 16 K 31/00
F 16 T 1/00

The present search report has been drawn up for all claims

| Place of search | Date of completion of the search | Examiner |
|---|---|---|
| THE HAGUE | 14-04-1983 | VERELST P.E.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82